Europäisches Patentamt

European Patent Office

Office européen des brevets

(11) Publication number: **0 291 091 B1**

# EUROPEAN PATENT SPECIFICATION

(45) Date of publication of patent specification: **01.12.93**  (51) Int. Cl.⁵: **H04N 1/46**

(21) Application number: **88107767.1**

(22) Date of filing: **13.05.88**

(54) **Image reader having spectroscope for color separation.**

(30) Priority: **15.05.87 JP 119339/87**

(43) Date of publication of application:
**17.11.88 Bulletin 88/46**

(45) Publication of the grant of the patent:
**01.12.93 Bulletin 93/48**

(84) Designated Contracting States:
**DE FR GB**

(56) References cited:
**EP-A- 0 043 721**
**DE-A- 2 446 923**
**US-A- 3 798 354**

**PATENT ABSTRACTS OF JAPAN, vol. 4, no.
181 (E-37)[663] 13th December 1980; & JP-
A-55 124 379 (Canon) 25.09.1980**

(73) Proprietor: **Dainippon Screen Mfg. Co., Ltd.
1-1, Tenjinkitamachi
Teranouchi-Agaru 4-chome
Horikawa-Dori
Kamikyo-ku Kyoto 602(JP)**

(72) Inventor: **Hirosawa, Makoto c/o Dainippon
Screen MFG. Co.,LTD
1-1, Tenjinkitamachi Teranouchi-Agaru
4-chome
Horikawa Dori Kamikyo-ku Kyoto(JP)**

(74) Representative: **Goddar, Heinz J., Dr. et al
FORRESTER & BOEHMERT
Franz-Joseph-Strasse 38
D-80801 München (DE)**

## Description

The present invention relates to an image reader according to the features of the preamble of claim 1.

Such an image reader is known from DE-A-2 446 923 and can be used to separate light from the original into three color components, i.e., red, blue and green, and for photoelectrically converting the same into electrical signals using respective separate image sensors in a process color scanner or the like, where an image of an original is read sequentially along scanning lines for each color component.

As in DE-A-2 446 923 the image sensors being image pick-up tubes for sensing the three color light components are disposed separately from each other as well as mounted in different directions and are disposed separately from the spectroscope means, misalignment cannot be excluded causing disturbances such as color deviation reducing the quality of the produced image, and the image reader itself needs too much space.

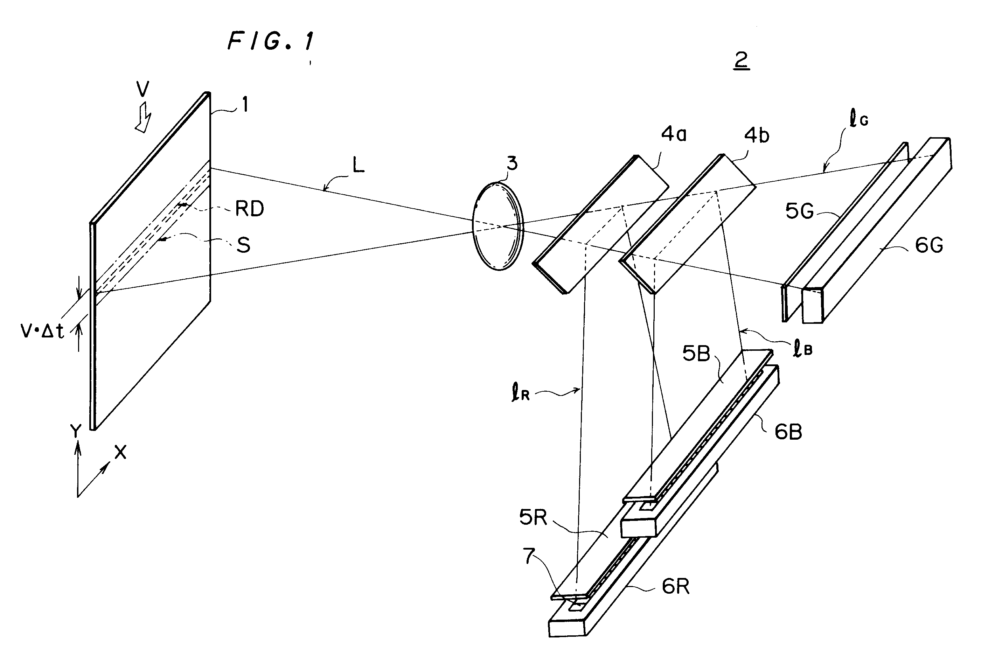

Fig. 1 of the accompanying drawings is a diagramm showing an example of another conventional image reader 2. The image reader 2 has an image-formation lens system 3, so that light L from a read line RD along a main scanning direction X on an original 1 enters the image reader 2 through the image-formation lens system 3.

The light L is directed along three paths by first and second half mirrors 4a and 4b, to provide three image-formation beams $I_R$, $I_B$ and $I_G$. Filters 5R, 5B and 5G for extracting the red, blue and green components of the light are provided in paths of the image-formation beams $I_R$, $I_B$ and $I_G$, respectively. Respective linear image sensors 6R, 6B and 6G are provided behind the filters 5R, 5B and 5G.

In order to read the intensity levels of the red, blue, and green components supplied through the filters 5R, 5B and 5G, the linear image sensors 6R, 6B and 6G are each provided with a one-dimensional array of light receiving cells 7.

The image sensor 2 and the original 1 are moved relative to each other in a subscanning direction Y at a velocity V. Light from a strip-shaped region S is received by the respective linear image sensors 6R, 6B and 6G in a prescribed time $\Delta t$, defining a single scanning line having a width of (V•$\Delta t$). The entire image of the original 1 is sequentially scanned and read by continued relative movement of the original 1 and the image reader 2 while repeating image reading for each scanning line.

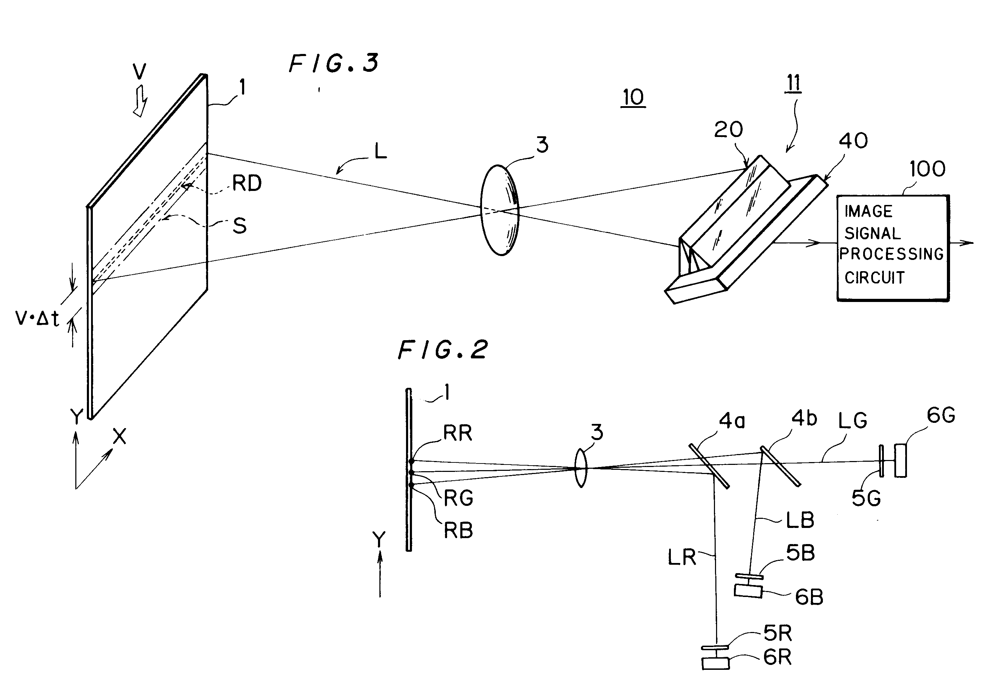

When misalignment exists between the linear image sensors 6R, 6B and 6G and the half mirrors 4a and 4b in the image reader 2, there is a resulting displacement in the position of the read lines to be read by the linear image sensors 6R, 6B and 6G, respectively. Fig. 2 typically shows such a state, in which the respective linear image sensors 6R, 6B and 6G receive image data from different read lines RR, RB and RG, although they should receive read image data from the same read line. As a result, degradation in picture quality such as color deviation is caused when an image is reproduced by combining image data of the original 1 read by the linear image sensors 6R, 6B and 6G.

Such misalignment occurs not only in assembling the apparatus, but also after assembly by thermal expansion of respective members or mechanical deformation in transportation etc.. Thus, it is difficult to prevent the occurrence of degradation in picture quality, even if careful assembling and adjustment of the elements constituting the image sensor are performed. Furthermore, since it is the read position of the original 1 itself which is in error, a faithful image cannot be reproduced even if signal processing such as a color masking operation is performed on a signal obtained by the image reading.

Such a problem is typically encountered with image reading in an apparatus that requires image reading of particular high accuracy, such as a process color scanner, although the same problem is also relevant to other apparatus for reading color images, such as a color facsimile or a color copying apparatus.

Thus, object of the present invention is to prevent misalignment between structural members and to provide a compact image reader. Even in the case of misalignment between an original, an image lens system and a detection unit the image reader according to this invention ensures a correct reading by the fact that said means are equally effected by said misalignment.

According to the invention the aforesaid is achieved by fulfilling the features of the characterizing part of claim 1.

Even if misalignment is caused between the image-formation optical system and the spectroscope, light from a common position of the original image forms linear images on the image formation positions of the respective color light components since the image forming positions of the respective color light components have the common conjugate position. Since the spectroscope is fixed and integrated with the image sensing device, no misalignment is caused between the spectroscope and the image sensing device. Such structure that the optical axes of the color light components are perpendicular to the light receiving surfaces of the linear image sensors prevents color deviation of a reproduced image caused by misalignment.

Preferred embodiments of the present invention are described in the claims 2 to 5.

In order that the invention may be more readily understood, embodiments thereof will now be described, by way of example, with reference to the accompanying drawings, in which:

Figs. 1 and 2 are explanatory diagrams showing the conventional image reader described above;

Fig. 3 is a perspective view of first embodiment of the present invention;

Fig. 4 is an enlarged side view of part of the first embodiment;

Fig. 5 illustrates image-formation positions of respective color light components and a conjugate position thereof;

Fig. 6 is an explanatory diagram showing a multi-row image sensor;

Fig. 7 is a partial diagram showing related art;

Figs. 8, 9 and 10 are partial diagrams showing second, third and fourth embodiments of the invention respectively;

Figs. 11A and 11B are explanatory diagrams relating to the second embodiment of the invention; and

Figs. 12A through 12C are partial diagrams showing a further embodiment of the invention.

## A. Structure of First Embodiment

Fig. 3 is a perspective view of image reader 10 according to a first embodiment of the present invention.

In the image reader 10, light L from an image of an original 1 is imaged by an image-forming lens system 3, serving as an image-forming optical system, to be supplied to a spectrodetector 11. The spectrodetector 11 is formed by combining a spectroscope 20 and a multi-row image sensor 40 as hereinafter described.

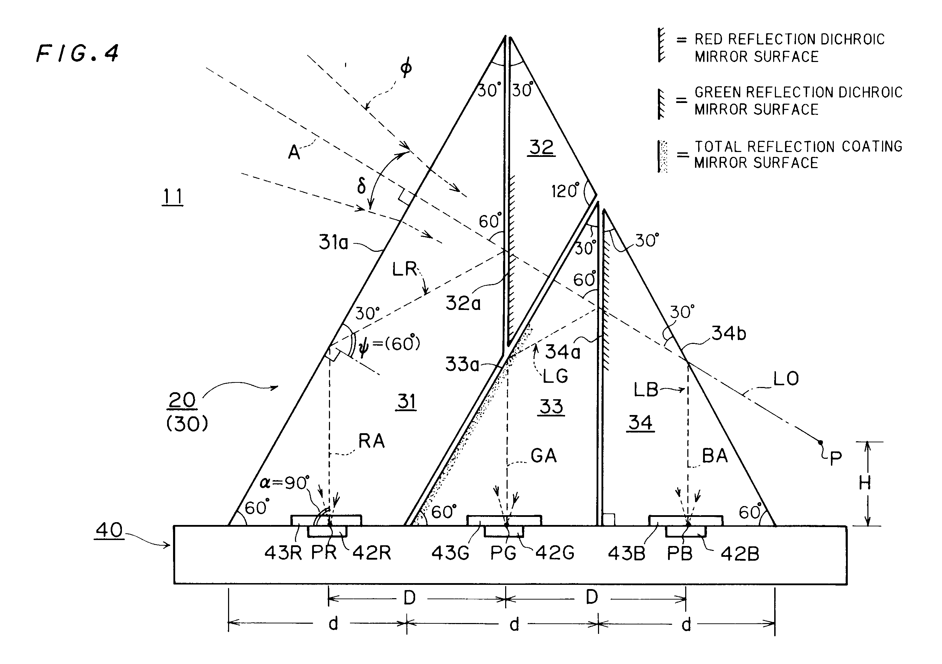

Fig. 4 shows the detailed structure of the spectrodetector 11. The spectroscope 20 is formed as a composite transparent body 30 obtained by performing required light reflection treatment on the surfaces of four polygonal-prismatic transparent bodies 31 to 34 and coupling the same with each other by adhesion. Although small clearances are shown between the coupled surfaces of the adjacent transparent bodies 31 to 34 in Fig. 4 for convenience of illustration, in practice such coupling surfaces of the transparent bodies 31 to 34 are tightly adhered to each other to exclude any layer of air or the like therebetween. This also applies to other embodiments hereinafter described. Each of the transparent bodies 31 to 34 is made of transparent glass, which may be replaced by transparent plastic, crystal or the like.

The first transparent body 31 is in the form of a trapezoidal bar extending in a direction perpendicular to the plane of the drawing, while the other transparent bodies 32 to 34 are in the form of triangular bars extending in the same direction. All of the apex angles of the transparent bodies 31 to 34 are multiples of 30°, so that the entire composite transparent body 30 is in the form of a bar with a cross-section in the form of an equilateral triangle.

Of the surfaces of the transparent bodies 31 to 34 shown in Fig. 4, regions indicated in parallel slanting lines or the like are a red reflection dichroic mirror surface, a green reflection dichroic mirror surface and a total reflection coated surface, respectively, which are hereinafter referred to as "red reflection surface", "green reflection surface" and "total reflection surface", respectively. Contents of the surface reflection treatment are shown in the row of "Fig. 4" in Table 1, where symbol * indicates those surfaces which must be partially subjected to the reflection treatment. The surfaces of the other ones may be either entirely or partially subjected to such reflection treatment.

Table 1

| | red reflection surface | green reflection surface | total reflection surface |
|---|---|---|---|
| Fig. 4 | 32a | 34a | 33a* |
| Fig. 8 | 62a | 64a | 63a*<br>65a*<br>65b |
| Fig. 9 | 73a | 76a | 72a<br>72b*<br>74a*<br>76b |
| Fig. 10 | 83a | 86a | 81b<br>82a<br>82b*<br>85a<br>85b*<br>88b |

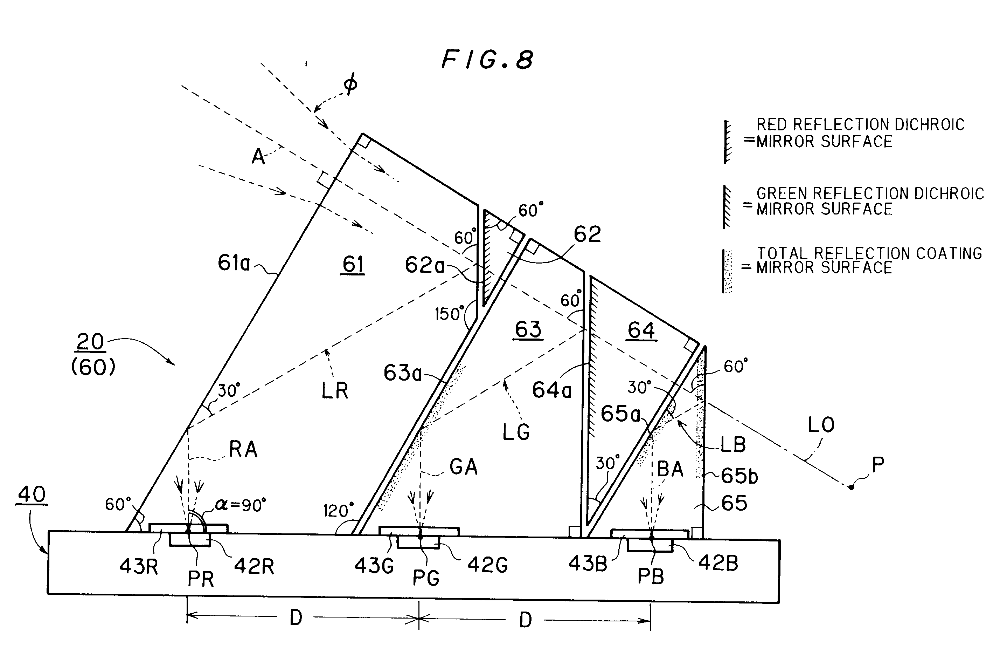

Concerning remaining surfaces, light transmitting parts thereof are subjected to anti-reflection coating, which also holds true to Figs. 7 to 10 hereinafter described.

The spectroscope 20 is so arranged that an optical axis A of imaged light or light flux $\phi$ having passed through the image-forming lens system 3 is perpendicular to a surface 31a of the first transparent body 31. Thus, the surface 31a serves as a light incident plane through which the flux $\phi$ enters into the body 31. The surface 31a is one of a plurality of outer peripheral surfaces of the spectroscope 20.

The light that enters the spectroscope 20 through the surface 31a reaches a surface 32a of the second transparent body 32, so that only a red component of the light is reflected by the surface 32a. Of light components of the light propagating in the interior of the transparent element coupled body 30, only a light beam propagating along its optical axis is mainly shown in each of Fig. 4 and Figs. 7 to 10 hereinafter described, for convenience of illustration. The embodiment will be further described with reference to the light beam propagating along its optical axis, unless particularly noted.

A red light component LR thus separated from the incident light is incidenton the surface 31a from inside the transparent body 31. The angle of incidence $\phi$ at which the red light component LR impinges on the surface 31a is 60°. Therefore, the red light component LR is totally reflected by the surface 31a at a reflection angle of 60°, propagates downwardly in Fig. 4 and is incident perpendicularly on a light receiving surface of a linear image sensor 42R hereinafter described, thereby to form a linear red image in an image-formation position PR on the light receiving surface.

Light passing through the surface 32a of the second transparent body 32 linearly passes through interiors of the second and third transparent bodies 32 and 33 to reach a surface 34a of the fourth transparent body 34, so that only a green component of the light is reflected by the surface 34a. A green light component LG separated from the light is totally reflected by a surface 33a of the third transparent body 33 to propagate downwardly in Fig. 4. This green light component LG forms a linear green image in a position PG on a linear image sensor 42G. The image-formation position PG is present on a light receiving surface of the linear image sensor 42G. It may be easily understood by those skilled in the art that the green light component LG is also reflected by the total reflection surface 33a at the angle of 60°, so as to be incident perpendicularly on the light receiving surface of the linear image sensor 42G.

Further, light also passing through the surface 34a of the fourth transparent body 34 (i.e., a blue light component LB) is totally reflected by another surface 34b of the fourth transparent body 34 to propagate downwardly in Fig. 4. The blue light component LB perpendicularly impinges on a light receiving surface of a linear image sensor 42B in an image-formation position PB of the image sensor 42B like the cases of the red light component LG and the green light component LG, to form a linear blue image thereon The position PB is present on the light receiving surface of the linear image sensor 42B.

Since the light flux $\phi$ after entering the transparent element coupled body 30 is reflected therein but is not subjected to refraction or the like, the virtual image-formation position P of the light flux $\phi$ serves as a common conjugate position of the image-formation positions PR, PG and PB. This conjugate position P is taken as a "conjugate point" with respect to a point in the image, and as a "conjugate line" with respect to one line in the image. In other words, an optical path LO directed toward the conjugate position P serves as a conjugate optical path that is common to the respective optical paths of the light components LR, LG and LB.

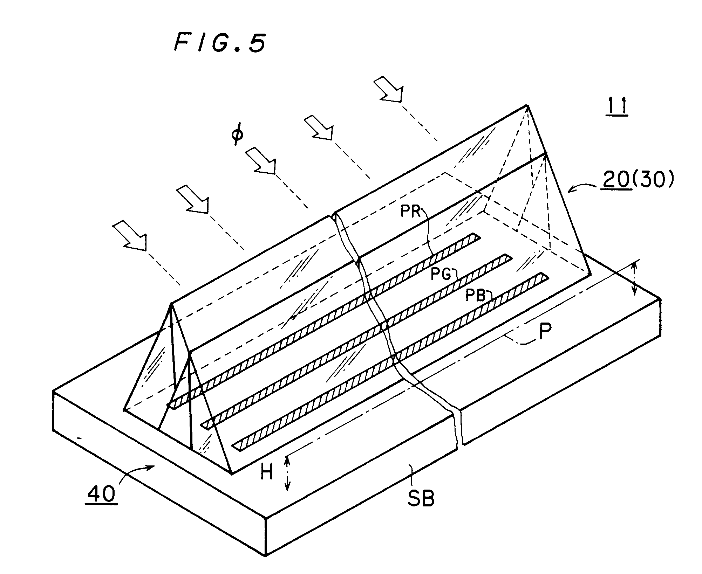

The image-formation positions PR, PG and PB are spaced on a common plane at regular intervals D, since the lengths of the bases of the first, third and fourth transparent bodies 31, 33 and 34, as shown in Fig. 4, all have an equal value d. Such a situation is also shown in Fig. 5. In Figs. 4 and 5, symbol H indicates the amount of common displacement in the vertical direction between the conjugate position P and the image-formation positions PR, PG and PB. The optical axes RA, GA and BA of the respective color components LR, LG and LB are parallel to one another when they reach the respective linear image sensors 42R, 42G and 42B, are perpendicular to the bases of the first, third and fourth transparent bodies 31, 33 and 34.

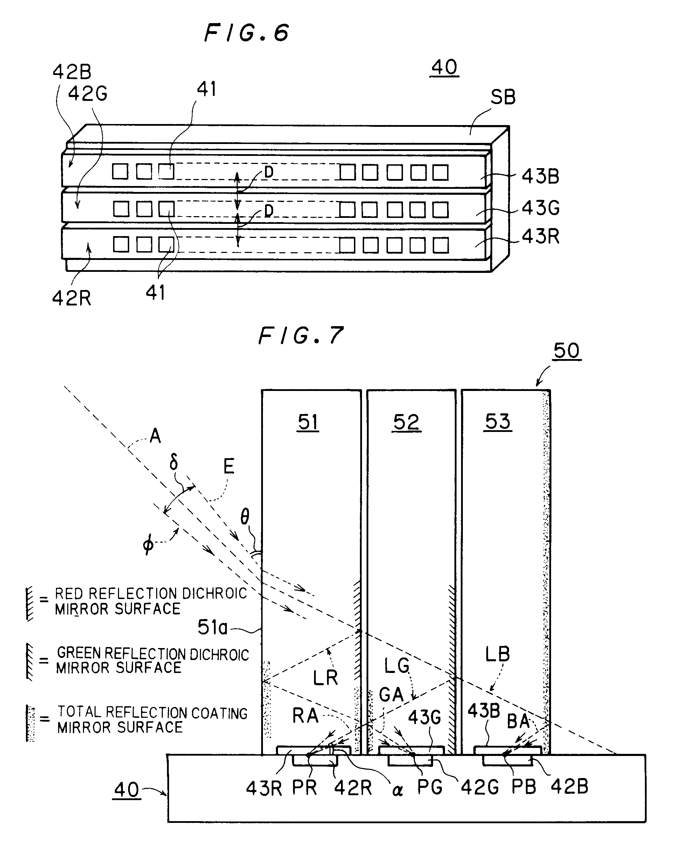

As shown in Fig. 6, a multi-row image sensor 40 is formed by integrating three linear image sensors 42R, 42G and 42B with one another in parallel on the same plane. Each of the linear image sensors 42R, 42G and 428 has one-dimensional array of light receiving cells 41. The linear image sensors 42R, 42G and 42B are adapted to receive the red light component, the green light component and the blue light component for one line in the main scanning direction for each pixel, respectively. The linear image sensors 42R, 42G and 42B are formed on a common substrate SB so as to be parallel to one another, while red, green, and blue filters 43R, 43G, and 43B are fixed on the surfaces of the respective cell arrays. Employment of the red, green and blue filters 43R, 43G and 43B is not necessarily required but these filters 43R, 43G and 43B are preferably employed in order to obtain preferable color separation characteristics in a reproduced image.

The center-to-center spacing D between the respective linear image sensors 42R, 42G and 42B is made identical to the base length d of the respective ones of the transparent bodies 31, 33 and 34 included in the spectroscope 20. As shown in Fig. 4, the multi-row image sensor 40 is fixed to and integrated with the spectroscope 20 such that rows of respective light receiving cell surfaces of the linear image sensors 42R, 42G and 42B are located in the image-formation positions PR, PG and PB of the respective color components. Therefore, the color components LR, LG and LB leave the spectroscope 20 through a light exit surface (junction surface between the spectroscope 20 and the multi-row image sensor 40), which is one of the outer peripheral surfaces of the spectroscope 20, to form respective linear images on a light receiving surface immediately after leaving the spectroscope.

Since the optical axes RA, GA and BA of the respective color components LR, LG and LB are respectively perpendicular to the bases of the first, third and fourth transparent bodies 31, 33 and 34, light receiving surfaces of the linear image sensors 42R, 42G and 42B are located on a common plane and perpendicular to the optical axes RA, GA and BA respectively.

Referring to Fig. 3, the image reader 10 and the original 1 are moved relative to each other in subscanning direction Y at the velocity V. Such movement is effected by a scanning driving mechanism (not shown). The read line RD is defined by a linear region on the original 1 currently read by the multi-row linear image sensor 40. The read line RD is moved on the surface of the original 1 along the direction Y by $V \cdot \Delta t$ in a prescribed time $\Delta t$, thereby to define a scanning line S. Image information on the scanning line S is read by the multi-row image sensor 40. The three respective one-dimensional arrays of light receiving cells in the multi-row image sensor 40 are serially accessed by an image signal processing circuit 100, whereby main scanning of the original 1 is achieved. The one-dimensional arrays of the light receiving cells are periodically accessed while moving the original 1 in a direction shown by an arrow V, thereby to effect subscanning of the original 1. The image signal processing circuit 100 provides processing such as gradation correction, for example, to the image information from the multi-row image sensor 40, and an output signal thereof is supplied to a halftone dot recorder (not shown), for example. The image signal processing circuit 100 may be constructed of various well-known circuits.

## B. Characteristics of First Embodiment

As hereinabove described, the image-formation light $\phi$ is separated into the respective color components LR, LG and LB, which are guided to the respective linear image sensors 42R, 42G and 42B to be received by the linear image sensors 42R, 42G and 42B. The spectroscope 20 and the multi-row image sensor 40 (i.e., the spectroscope 20 and the linear image sensors 42R, 42G and 42B) are integrated with each other. Therefore, no misalignment can be caused between the spectroscope 20 and the linear image sensors 42R, 42G and 42B, and quality deterioration of a read image caused by such misalignment can be prevented.

Since the image-formation positions PR, PG and PB have the common conjugate position P, image formations in the image-formation positions PR, PG, and PB are equivalent to those in the conjugate position P. Therefore, even if a misalignment occurs between the original 1, the image-formation lens system 3 and the spectrodetector 11 , with a resulting displacement of an image to be formed at the conjugate position P (i.e., displacement of position of the read line RD), the effect of such displacement is common to the respective linear image sensor 42R, 42G and 42B, and no read deviation is caused therebetween. Consequently, the respective linear image sensors 42R, 42G and 42B detect a common image even if misalignment occurs.

For the aforementioned reasons, the quality of a read image is not reduced by misalignment between components of the apparatus embodying the present ivention. Further, the apparatus is compact and the optical system thereof is relatively simple in structure since the spectroscope 20 is integrated with the linear image sensors 42R, 42G and 42B.

In the spectroscope 20 shown in Fig. 4, the incident plane 31a of the light $\phi$ (the one surface of the first transparent body 31) is made orthogonal to the optical axis of the light $\phi$. Further, the color components LR, LG and LB are reflected by the surfaces 31a, 33a and 34b, respectively, whereby the optical axes RA, GA and BA extending to linear image sensors 42R, 42G and 42B are perpendicular to the respective light receiving surfaces of the linear image sensors 42R, 42G and 42B.

In order to clarify advantages of such perpendicular light incidence and perpendicular light receiving, a spectroscope 50 shown in Fig. 7 will be explained as a related art which is not prior art. The spectroscope 50 is formed by performing light reflection treatment on the surfaces of three parallel transparent plates 51 to 53 as illustrated in Fig. 7 and adhering the same with each other. This spectroscope 50 is integrated with a multi-row image sensor 40. Imaged light $\phi$ enters the spectroscope 50 so that its optical axis A is at a prescribed angle close to 45° with a surface 51a, and respective color components LR, LG and LB propagate to respective light receiving surfaces of linear image sensors 42R, 42G and 42B, so as to form respective linear images. In this technique, the spectroscope 50 is advantageously integrated with the multi-row linear image sensor 40 as in the case of the embodiment as shown in Fig. 4, while the following problem arises:

When a spread angle $\delta$ of the light flux $\phi$ is increased, an angle $\theta$ made by an edge ray E of the light $\phi$ with the surface 51a (light incident plane) is considerably reduced. The refractive index of glass is larger than that of air, and the spectroscope 50 has a finite total reflection critical angle (about 42°) in its inner side. When light in the vicinity of the edge ray E enters the surface 51a at an incidence angle close to those in horizontal incidence, the light in the vicinity of the edge ray E chiefly enters the spectroscope at an angle of incidence approximating to the critical angle, and the light of this part cannot effectively form an image on the light receiving surfaces of the linear image sensors 42R, 42G and 42B. Therefore, the spread angle $\delta$ cannot be large in the structure shown in Fig. 7. In the spectroscope 50 of Fig. 7, angles of incidence of the light components LR, LG and LB on the linear image sensors 42R, 42G and 42B are large, i.e., the angle $\alpha$ shown in Fig. 7 is small. Thus, the efficiency of light incidence on the light receiving surfaces is low and the image sensors are easily susceptible to misregistration.

On the contrary, substantially no deviation in image formation is caused in the spectroscope 20 shown in Fig. 4 even if the spread angle $\delta$ is increased to some extent, since the optical axis A of the image-formation light $\phi$ is perpendicular to the incident plane, i.e. the surface 31a. Further, the optical axes RA, GA and BA of the respective color components LR, LG and LB are made perpendicular to the light receiving surfaces of the linear image sensors 42R, 42G and 42B by reflection on the surfaces 31a, 33a and 34b, whereby efficiency of light incidence is increased while substantially no adverse effect is caused by misregistration.

Thus, the spectroscope 20 shown in Fig. 4 can obviate the adverse effects of misalignment, as well as bringing the aforementioned other advantages. Such characters are also maintained in second to fourth embodiments as hereinafter described.

## C. Second, Third and Fourth Embodiments

Figs. 8, 9 and 10 illustrate respective second to fourth embodiments of the present invention. These partial diagrams correspond to Fig. 4 showing the first embodiment, and the second to fourth embodiments are identical in other structure to the first embodiment. Only the parts which are different from those of the first embodiment will be described below.

In the second embodiment shown in Fig. 8, a spectroscope 20 is formed by a composite transparent body 60 obtained by performing light reflection treatment as shown in Fig. 8 on surfaces of first to fifth transparent bodies 61 to 65 and coupling the same with one another by adhesion. The transparent body 61 is in the form of a pentagonal bar and the transparent body 63 is in the form of a bar of quadrilateral cross-section, while the transparent bodies 62, 64 and 65 are in the form of triangular bars. The cross-section of the entire composite body 60 is in the form of a quadrilateral bar. Table 1 shows the details of surface reflection treatment carried out on the transparent bodies.

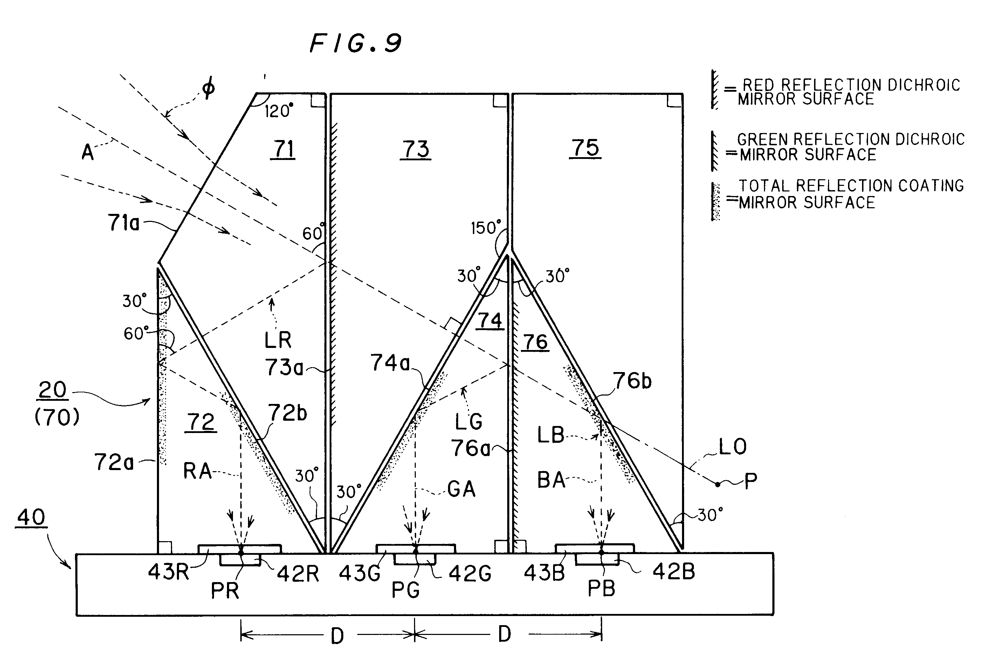

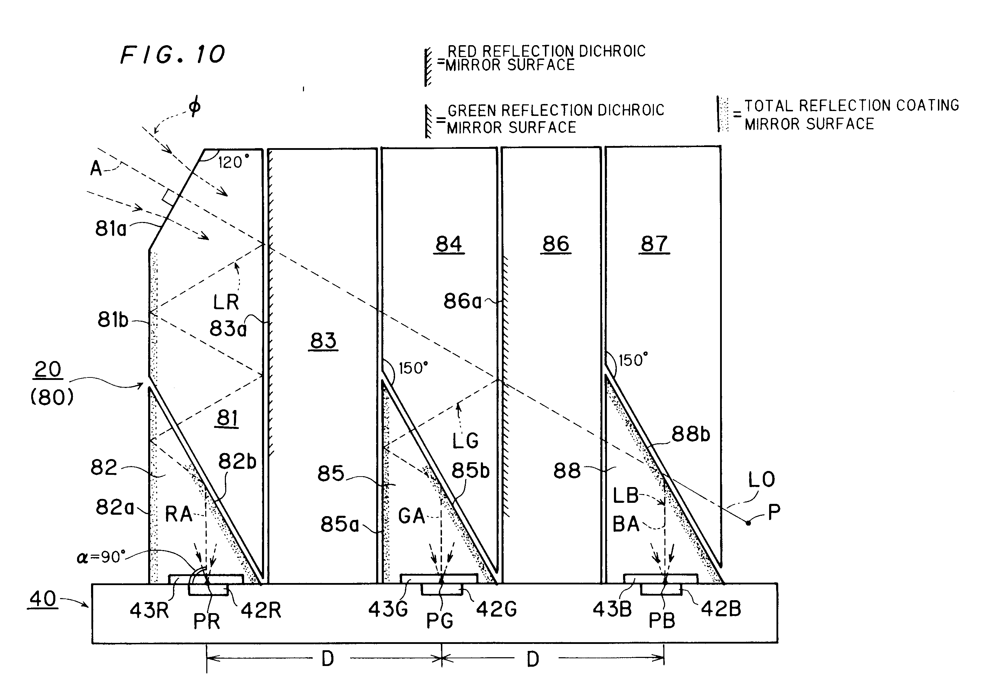

In the third embodiment shown in Fig. 9, a spectroscope 20 is formed as a composite transparent body 70 obtained by coupling first to sixth transparent bodies 71 to 76. In the fourth embodiment shown in Fig. 10, a spectroscope 20 is formed by a composite transparent body 80 obtained by coupling first to seventh transparent bodies 81 to 87. Table 1 also shows details of surface reflection treatment performed in these embodiments.

In the second to fourth embodiments, the surfaces listed in the first to third rows of the respective columns in Table 2 serve as light incident planes, color separation planes and optical axis direction changing planes, respectively. The "optical axis direction changing planes" are reflection planes for reflecting respective color components LR, LG and LB for directing optical axes RA, GA and BA thereof to image-formation positions PA, GA and BA on light receiving surfaces of linear image sensors 42R, 42G and 42B while making these optical axes RA, GA and BA perpendicular to the light receiving surfaces of the linear image sensors 42R, 42G and 42B. Table 2 also shows the functions of the respective planes or surfaces in the first embodiment.

Table 2

|  | Fig. 8 | Fig. 9 | Fig. 10 | Fig. 4 |
|---|---|---|---|---|
| light incident plane | 61a | 71a | 81a | 31a |
| color separation planes | 62a 64a | 73a 76a | 83a 86a | 32a 34a |
| optical axis direction chaging planes | 61a 63a 65a | 72b 74a 76b | 82b 85b 88b | 31a 33a 34b |

The light incident plane is one of outer peripheral surfaces of the spectroscope 20, and the color separation planes are obtained by performing the color reflection treatment on parts of interjunction planes between the transparent bodies. The optical axis direction changing surfaces are parts of outer peripheral surfaces or interjunction surfaces between the transparent bodies. These embodiments have characteristics similar to those of the first embodiment although they are different in configuration and number of the transparent bodies from one another, and hence function and effect similar to those of the first embodiment can be obtained using any of the second to fourth embodiments. Optical paths for the respective light components LR, LG and LB are shown in Figs. 8 to 10 and may be easily understood by analogy with the first embodiment.

The second embodiment shown in Fig. 8 also has another preferable character with respect to any displacement at the junction of the spectroscope 20 and the multi-row image sensor 40. Referring to Fig. 11A simplifying Fig. 8, the linear image sensors 42R, 42G and 42B simultaneously receive lights from a range between points b and d on the surface of the original 1. In Fig. 11A, the distance in a direction Z in a region 201 is shown compressed, and hence an angle defined by optical axes Ab and Ad in the region 201 shown in Fig. 11A is expressed as different from that in a region 202, although they are equal to each other in practice.

After the imaged light enters the spectroscope 20 through the incident plane 61a of the transparent body 61, the color components LR, LG and LB are reflected twice on the surfaces of the transparent bodies 61 to 65, to be supplied to the light receiving surfaces of the linear image sensors 42R, 42G and 42B, respectively. Since all of the color components LR, LG and LB are reflected an even number of times (i.e., 2 x n times where n is an integer), image-formation positions of light components from the points b, c and d of the original 1 on the linear image sensors 42R, 42G and 42B are arrayed along a direction reverse to a direction K from the right to the left in Fig. 11A.

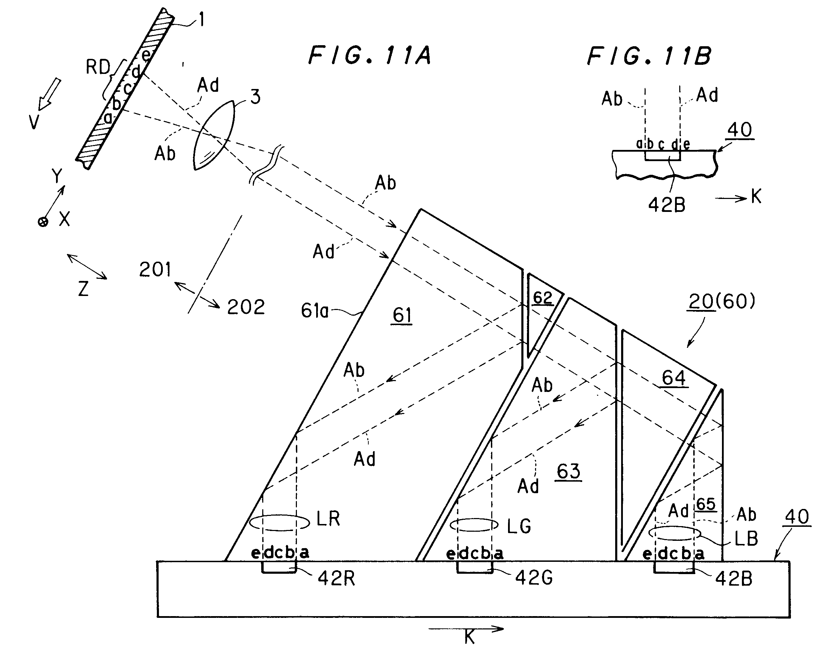

Assuming that the linear image sensors 42R, 42G and 42B are uniformly displaced in the direction K by some amount of a junction error between the multi-row image sensor 40 and the spectroscope 20 in the direction K. All of the linear image sensors 42R, 42G and 42B will receive light from a range between points c and e on the original 1. In other words, the aforementioned error causes reading deviation in a common direction in the respective linear image sensors 42R, 42G and 42B. Consequently, the relationship between respective read positions of the linear image sensors 42R, 42G and 42B is invariable and color deviation in a reproduced image is substantially prevented. Such character is common to the case where all of the color components are reflected an even number of times to enter the linear image sensors 42R, 42G and 42B after incidence thereof on the spectroscope 60. Alternatively, all of the color components may be reflected an odd number of times. If one of the color components is reflected an odd number of times and the remaining ones are reflected an even number of times, the aforementioned characteristics cannot be obtained. Consider, for example, a case wherein the blue light component LB is reflected an odd number of times, while the red light component LR and the green light component LG are reflected an even number of times. The directions of light receiving ranges on the linear image sensors 42R and 42G are similar to those in Fig. 11A, while the direction of a light receiving range on the linear image sensor 42B is reversed compared to that in Fig. 11A, as shown in Fig. 11B. As a result, when the multi-row image sensor 40 is displaced in the direction K with respect to the spectroscope 20, the linear image sensors 42R and 42G receive light within a range between the points $\bar{c}$ and $e$, while the linear image sensor 42B receives the light in the range between the points $\bar{a}$ and $\bar{c}$. Thus, the light receiving ranges for the red component and the green component are different from the light receiving range for the blue component, thus causing color deviation in a reproduced image. Therefore, it is preferable if all of the color components are reflected an even or odd number of times as far as any junction error between the spectroscope 20 and the multi-row image sensor 40 is concerned.

In each of the first to fourth embodiments, the angle formed by the optical axis A of the incident light $\phi$ and the multi-row image sensor 40 is 30° (not indicated). The color components LR, LG and LB are reflected at an angle of incidence of 30° n times (n = 0, 1, 2, ...) and thereafter reflected on the optical axis direction changing planes at an angle of incidence of 60° to impinge upon the image-formation positions PR, PG and PB. Therefore, various modifications may be considered based on the first to fourth embodiments. In each of the first to fourth embodiments as described above, a relatively small number of transparent bodies in the form of bars triangular, quadrilateral and pentagonal cross-section may be coupled with one another, to provide a compact structure.

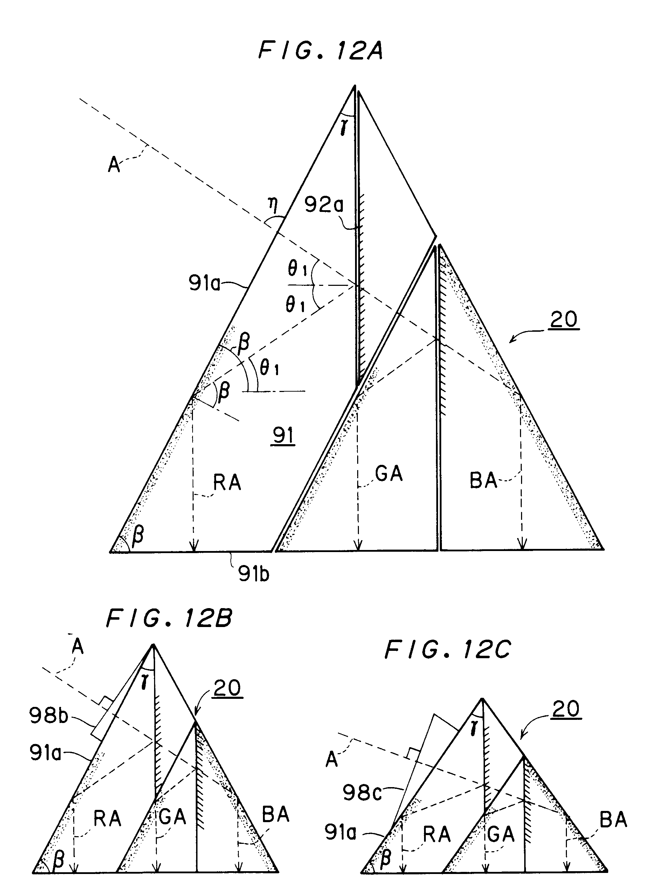

The present invention can also be carried out by making the aforementioned angles other than 30° and 60°. In order to prove this, it is assumed, in the structure shown in Fig. 12A, that symbol $\beta$ and symbol $\gamma$ represent apex angles of a transparent body 91 and symbol $\theta_1$ represents an angle of incidence of an optical axis A upon a reflection surface 92a, where

$$\beta + \gamma = 90° \qquad (1)$$

In order to make an optical axis RA of a red light component perpendicular to a bottom surface 91b, it is necessary to make the optical axis RA of the red light component impinge on the surface 91a at the angle $\beta$. Through a geometrial analysis, one obtains:

$$2\beta - \theta_1 = 90° \qquad (2)$$

Since the equation (2) can be modified as

$$\beta = (90° + \theta_1) / 2 \qquad (3)$$

perpendicular incidence of the red light component upon the bottom surface 91b is effected by setting the angles $\beta$ and $\theta_1$ to satisfy the expression (3).

Therefore, if $\beta \neq 60°$, then $\theta_1 \neq 30°$ according to the expression(3), and an angle $\eta$ made by the optical axis A with the surface 91a is generally an angle other than 90°. Namely, so far as the relationship between the angles $\beta$ and $\theta_1$ is set in accordance with the expression (3), the optical axis RA of the red light component can be made perpendicular to the bottom surface 91b (i.e., light receiving surface) even if incidence of the light $\phi$ is non-perpendicular to the light incident plane, i.e., the surface 91a. This also holds true for green and blue light components. Such modification may be performed in each of the aforementioned embodiments. Thus, the present invention can be carried out even if the optical axis of incident light is not perpendicular to the incident plane. An angle $\gamma$ in Fig. 12A may be selected to satisfy:

$$\gamma = 90° - \beta = (90° - \theta_1) / 2 \qquad (4)$$

according to the expressions (1) and (3).

In the examples shown in Figs. 12B and 12C, triangular prisms 98b and 98c having the required apex angles are mounted on a light incident plane constituting the surface 91a, to effect substantially perpendicular incidence upon the incident plane even if $\beta \not= 60°$ and $\gamma \not= 30°$.

In the present invention, it is not essential to make the optical axes RA, GA and BA of the respective color components exactly perpendicular to the light receiving surfaces. Namely, the specific design of having these optical axes perpendicular or approximately perpendicular to the incident plane aims at improving the photoelectric conversion efficiency in the linear image sensors. The angle formed by the optical axis A of the incident light $\phi$ and the incident plane is not restricted to an exactly perpendicular one, but may be Substantially perpendicular or approximately perpendicular. The "approximately perpendicular" angle is relatively defined by the spread angle $\delta$ of the light $\phi$ etc., while the same is generally an angle smaller than 45°, as shown in Fig. 7, for example.

### D. Modification

In each of the aforementioned embodiments, the linear image sensors 42R, 42G and 42B themselves are integrated with one another to form the multi-row linear image sensor 40. Thus, Substantially no misalignment is caused among the linear image sensors 42R, 42G and 42B in practice, to further increase the effect. However, in the case where the linear image sensors 42R, 42G and 42B are fixed to the spectroscope 20 as shown in Fig. 4, mutual positional relation among the respective linear image sensors 42R, 42G and 42B is fixed through the spectroscope 20, and hence the sensors may not necessarily be formed as a multi-row image sensor.

The present invention is not restricted to a process color scanner, but may also be applied to an image reader employed for a color facsimile or a color copying apparatus.

According to the present invention, the spectroscope is integrated with the linear image sensors while the image-formation positions of the respective color components have the common conjugate position, whereby to obtain an image reader in which substantially no quality deterioration of a read image is caused by misalignment.

The optical axis of incident light is perpendicular or approximately perpendicular to the light incident plane while the optical axes of the respective color components are perpendicular or substantially perpendicular to the light receiving surfaces, so as to relax the limitation in the spread angle of the incident imaged light, whereby light receiving efficiency is improved. Thus, quality for the read image can be further improved through a synergistic effect with the aforementioned prevention of the adverse effects of misalignment.

The features disclosed in the foregoing description, in the following claims and/or in the accompanying drawings may, both separately and in any combination thereof, be material for realising the invention in diverse forms thereof.

### Claims

1. An image reader (2) for separating light L from an image of an original (1) into three color components LR, LG, LB and detecting said color components by an image sensing device (40) in the order of scanning lines S, comprising:

   an image-forming optical system (3) for imaging light from the original (1);

   a spectroscope (20), to which the image sensing device (40) is fixed, composed of

   an interjunction structure of transparent bodies (31 - 34, 61 - 65, 71 - 76, 81 - 87),

   having a light incidence plane (31a, 61a, 71a, 81) through which the light L from the optical system (3) enters an interior of the spectroscope (20), and

   color separating planes (32a, 34a, 62a, 64a, 73a, 76a, 83a, 86a) for selectively reflecting the light L from the optical system (3) in the interior of the spectroscope (20) thereby separating the light L into the color components LR, LG, LB, and

   characterized in that

   the spectroscope (20) also comprises optical axis direction changing planes (31a, 33a, 34b, 61a, 63a, 65a, 72b, 74a, 76b, 82b, 85b, 88b) for totally reflecting the color components LR, LG, LB and directing the respective optical axis RA, GA, BA of said color components to respective predetermined image-forming positions PR, PG, PB having a common conjugate position P, and that the image sensing device is a multi-row linear image sensor (40) being integrated with said spectroscope (20) and formed by three linear image sensors (42R, 42G, 42B) which respectively receive the color light components LR, LG, LB and are mounted on the same substrate SB parallel to each other with the image-formation positions PR, PG, PB being located on respective light receiving surfaces of the linear sensors (42R, 42G, 42B) and the optical axis RA, GA, BA of said color components being perpendicular to the respective light receiving surfaces.

2. An image reader according to claim 1, wherein the light incidence plane (31a, 61a, 71a, 81a) is substantially perpendicular to the optical axis A of the image-forming optical system (3).

3. An image reader according to claim 1 or 2, wherein the color components LR, LG, LB are reflected in the interior of the spectroscope (20) respective predetermined numbers of times the values of which are selected from even numbers or odd numbers exclusively.

4. An image reader according to any preceding claim, wherein said linear image sensors (42R, 42G, 42B) are arrayed on the one surface of said substrate SB at regular intervals D, and the respective optical axes RA, GA, BA of the color components LR, LG, LB after reflection by the optical axis direction changing planes (31a, 33a, 34b, 61a, 63a, 65a, 72b, 74a, 76b, 82b, 85b, 88b) are prallel to one another and spaced at intervals equal to said regular intervals.

5. An image reader according any preceding claim, wherein the multi-row image sensor (40) is provided with color filters (43R, 43G, 43B) fixed on respective light receiving surfaces of the linear image sensors (42R, 42G, 42B).

**Patentansprüche**

1. Bildlesevorrichtung (2) zum Trennen von Licht L von einem Bild einer Vorlage (1) in drei Farbkomponenten LR, LG, LB und Erfassen der Farbkomponenten durch eine Bildfühlvorrichtung (40) in der Reihenfolge von Abtastlinien S, mit:
einem abbildenden optischen System (3) zum Abbilden von Licht von der Vorlage (1);
einem Spektroskop (20), an dem die Bildfühlvorrichtung (40) befestigt ist, aufgebaut aus
einer untereinander verbundenen Struktur aus transparenten Körpern (31-34, 61-65, 71-76, 81-87),
mit einer Lichteinfallsebene (31a, 61a, 71a, 81a), durch welche das Licht L von dem optischen System (3) in ein Inneres des Spektroskopes (20) eintritt, und farbtrennenden Ebenen (32a, 34a, 62a, 64a, 73a, 76a, 83a, 86a) zum selektiven Reflektieren des Lichtes L von dem optischen System (3) in das Innere des Spektroskopes (20), wodurch das Licht L in die Farbkomponenten LR, LG, LB zerlegt wird, und dadurch gekennzeichnet, daß
das Spektroskop (20) auch die Richtung optischer Achsen ändernde Ebenen (31a, 33a, 34b, 61a, 63a, 65a, 72b, 74a, 76b, 82b, 85b, 88b) zum Totalreflektieren der Farbkomponenten LR, LG, LB und zum Richten der jeweiligen optischen Achse RA, GA, BA der Farbkomponenten auf jeweilige vorbestimmte Abbildepositionen PR, PG, PB mit einer gemeinsamen konjugierten Position P aufweist, und daß die Bildfühlvorrichtung ein Vielreihen-Linearbildsensor (40) ist, der mit dem Spektroskop (20) integriert und durch drei Linearbildsensoren (42R, 42G, 42B) gebildet ist, die jeweils die Farblichtkomponenten LR, LG, LB empfangen und auf demselben Substrat SB parallel zueinander angebracht sind, wobei die Abbildepositionen PR, PG, PB auf jeweiligen lichtempfangenden Flächen der Linearsensoren (42R, 42G, 42B) gelegen sind und die optischen Achsen RA, GA, BA der Farbkomponenten senkrecht zu den jeweiligen lichtempfangenden Flächen sind.

2. Bildlesevorrichtung nach Anspruch 1, bei dem die Lichteinfallsebene (31a, 61a, 71a, 81a) im wesentlichen senkrecht zu der optischen Achse A des abbildenden optischen Systemes (3) ist.

3. Bildlesevorrichtung nach Anspruch 1 oder 2, bei der die Farbkomponenten LR, LG, LB jeweils vorbestimmt viele Male in das Innere des Spektroskopes (20) reflektiert werden, wobei die Werte ausschließlich aus geraden Ziffern oder ungeraden Ziffern ausgewählt werden.

4. Bildlesevorrichtung nach einem der vorangehenden Ansprüche, bei der die Linearbildsensoren (42R, 42G, 42B) auf einer Fläche des Substrates SB in regelmäßigen Intervallen D angeordnet sind und die jeweiligen optischen Achsen RA, GA, BA der Farbkomponenten LR, LG, LB nach Reflexion durch die die Richtung optischer Achsen ändernde Ebenen (31a, 33a, 34b, 61a, 63a, 65a, 72b, 74a, 76b, 82b, 85b, 88b) parallel zueinander und in Intervallen gleich den regelmäßigen Intervallen beabstandet sind.

10

5. Bildlesevorrichtung nach einem der vorangehenden Ansprüche, bei der der Vielreihen-Linearbildsensor (40) mit Farbfiltern (43R, 43G, 43B) versehen ist, die auf jeweiligen lichtempfangenden Oberflächen der Linearbildsensoren (42R, 42G, 42B) befestigt sind.

**Revendications**

1. Lecteur d'image (2) pour la séparation de la lumière L d'une image d'un original (1) en trois composantes de couleur LR, LG, LB et de détection desdites composantes de couleur par un dispositif de détection d'image (40) dans l'ordre des lignes de balayage, comprenant :
   - un dispositif optique de formation d'image (3) pour la formation d'une image de la lumière de l'original (1);
   - un spectroscope (20) auquel est fixé le dispositif de détection d'image (40) et composé d'une structure d'interconnexion de corps transparent (31 à 34, 61 à 65, 71 à 76, 81 à 87) possédant un plan de lumière incidente (31a, 61a, 71a, 81a) à travers lequel la lumière L du dispositif optique (3) pénètre à l'intérieur du spectroscope (20) et des plans de séparation de couleurs (32a, 34a, 62a, 64a, 73a, 76a, 83a, 86a) pour la réflexion sélective de la lumière L du dispositif optique (3) à l'intérieur du spectroscope (20), séparant ainsi la lumière L dans les composantes de couleur LR, LG, LB et

   caractérisé en ce que le spectroscope (20) comprend, de même, des plans de modification de la direction de l'axe optique (31a, 33a, 34b, 61a, 63a, 65a, 72b, 74a, 76b, 82b, 85b, 88b) pour la réflexion totale des composantes de couleur LR, LG, LB et pour diriger les axes optiques respectifs RA, GA, BA desdites composantes de couleur vers des positions respectives prédéterminées de formation d'image PR, PG, PB possédant une position conjuguée commune P et en ce que le dispositif de détection d'image (40) est un capteur linéaire d'image à plusieurs rangées (40) intégré audit spectroscope (20) et formé par trois capteurs linéaires d'image (42R, 42G, 42B), recevant respectivement les composantes de couleur LR, LG, LB et montés sur le même support SB, parallèles l'un à l'autre, les positions de formation d'image PR, PG, PB étant situées sur des surfaces respectives de réception de la lumière des capteurs linéaires (42R, 42G, 42B) et les axes optiques RA, GA, BA desdites composantes de couleur étant perpendiculaires aux surfaces respectives de réception de la lumière.

2. Lecteur d'image selon la revendication 1, dans lequel le plan de lumière incidente (31a, 61a, 71a, 81a) est pratiquement perpendiculaire à l'axe optique A du dispositif optique de formation d'image (3).

3. Lecteur d'image selon la revendication 1 ou 2, dans lequel les composantes de couleur LR, LG, LB sont réfléchies à l'intérieur du spectroscope (20) des nombres respectifs prédéterminés de fois dont les valeurs sont choisies exclusivement à partir de nombres pairs ou impairs.

4. Lecteur d'image selon l'une quelconque des revendications précédentes, dans lequel lesdits capteurs linéaires d'image (42R, 42G, 42B) sont rangés sur la surface dudit support SB selon des intervalles réguliers D et les axes optiques respectifs RA, GA, BA des composantes de couleur LA, LG, LB après réflexion des plans de modification de l'axe optique (31a, 33a, 34b, 61a, 63a, 65a, 72b, 74a, 76b, 82b, 85b, 88b) sont parallèles et espacés selon des intervalles égaux auxdits intervalles réguliers.

5. Lecteur d'image selon l'une quelconque des revendications précédentes, dans lequel le capteur d'image à plusieurs rangées (40) est muni de filtres de couleur (43R, 43G, 43B) fixés sur les surfaces respectives de réception de la lumière des capteurs linéaires d'image (42R, 42G, 42B).

*FIG.1*

EP 0 291 091 B1

*FIG.3*

*FIG.2*

IMAGE SIGNAL PROCESSING CIRCUIT

FIG.4

= RED REFLECTION DICHROIC MIRROR SURFACE

= GREEN REFLECTION DICHROIC MIRROR SURFACE

= TOTAL REFLECTION COATING MIRROR SURFACE

EP 0 291 091 B1

# FIG.5

$\phi$

11

20(30)

PR

PG

PB

P

40

H

SB

## FIG.6

## FIG.7

$\mathbb{E}$ = RED REFLECTION DICHROIC MIRROR SURFACE

$\mathbb{E}$ = GREEN REFLECTION DICHROIC MIRROR SURFACE

$\mathbb{I}$ = TOTAL REFLECTION COATING MIRROR SURFACE

16

FIG.8

| = RED REFLECTION DICHROIC =MIRROR SURFACE

| = GREEN REFLECTION DICHROIC =MIRROR SURFACE

| = TOTAL REFLECTION COATING = MIRROR SURFACE

## FIG.9

=RED REFLECTION DICHROIC MIRROR SURFACE

=GREEN REFLECTION DICHROIC MIRROR SURFACE

=TOTAL REFLECTION COATING MIRROR SURFACE

EP 0 291 091 B1

FIG. 10

= TOTAL REFLECTION COATING
= MIRROR SURFACE

= RED REFLECTION DICHROIC
= MIRROR SURFACE

= GREEN REFLECTION DICHROIC
= MIRROR SURFACE

FIG. 11A

FIG. 11B

EP 0 291 091 B1

## FIG. 12A

## FIG. 12B

## FIG. 12C